# EUROPÄISCHE PATENTSCHRIFT

(11) **EP 2 101 987 B1**
(45) Veröffentlichungstag und Bekanntmachung des Hinweises auf die Patenterteilung: **01.12.2010**
(21) Anmeldenummer: 08866770.4
(22) Anmeldetag: 15.12.2008
(51) Int. Cl.: B29C 67/00

(54) **VERFAHREN ZUM HERSTELLEN EINES DREIDIMENSIONALEN OBJEKTS**
METHOD FOR THE PRODUCTION OF A THREE-DIMENSIONAL OBJECT
PROCÉDÉ DE FABRICATION D'UN OBJET TRIDIMENSIONNEL

(30) Priorität: 21.12.2007 DE 102007062129
(43) Veröffentlichungstag der Anmeldung: 23.09.2009
(73) Patentinhaber: EOS GmbH Electro Optical Systems, 82152 Krailling (DE)
(72) Erfinder: PHILIPPI, Jochen, 82166 Gräfelfing (DE)
(74) Vertreter: Prüfer & Partner GbR European Patent Attorneys
(86) Internationale Anmeldenummer: PCT/EP2008/010637
(87) Internationale Veröffentlichungsnummer: WO 2009/083122

(56) Entgegenhaltungen:
- EP-A- 1 033 229
- US-A- 6 085 122

## Beschreibung

Die Erfindung betrifft ein Verfahren zum Herstellen eines dreidimensionalen Objekts nach dem Oberbegriff des Patentanspruches 1.

Aus der EP 0 758 952 B1 ist ein Verfahren zum Herstellen eines dreidimensionalen Objekts mittels Lasersintern bekannt, bei dem die Position, die Leistung und/oder der Durchmesser des Laserstrahls an einer Stelle unmittelbar oberhalb der zu verfestigenden Schicht gemessen wird und wobei das Messergebnis mit vorgegebenen Referenzwerten verglichen wird und aufgrund des Vergleiches eine Fehleranzeige oder Korrektur des Strahls vorgenommen wird. Bei dem Verfahren wird vorzugsweise ein Festkörper-Laser verwendet.

Ein Verfahren nach dem Oberbegriff des Patentanspruchs 1 ist aus der EP 1 705 616 A1 bekannt. Das bekannte Verfahren betrifft die Steuerung der Laserleistung bei einem Rapid Prototyping-System, wie beispielsweise einem Stereolitografiesystem oder einem Lasersintersystem. Bei derartigen Rapid Prototyping-Systemen wird das Objekt durch schichtweises Verfestigen eines im Falle der Stereolitografie flüssigen Aufbaumaterials und eines im Falle des Lasersinterns pulverförmigen Aufbaumaterials mittels eines Laserstrahls in jeder Schicht an den dem Querschnitt des Objekts in der Schicht entsprechenden Stellen verfestigt. Dabei wird der Laserstrahl über ein Scannersystem derart abgelenkt, dass er in Linien, wie beispielsweise Vektoren, über die Schicht geführt wird. Für jeden Bereich des herzustellenden Objekts ist eine optimale Belichtung erwünscht, die für alle Bereiche gleich oder auch von Bereich zu Bereich unterschiedlich sein kann. Bei den bekannten Verfahren wird die Leistung des Laserstrahls mittels eines Leistungsmessgeräts gemessen und dann die Laserleistung nachgeregelt, sodass die gewünschte Belichtungsstärke und Tiefe erreicht wird.

Gerade bei Gaslasern, insbesondere bei CO₂-Lasern, tritt jedoch das Problem auf, dass Kurz- und Langzeit-Schwankungen der Leistung des Lasers stark von den vorherigen Bedingungen des Laserbetriebs abhängen, die zudem ständig wechseln. Eine einfache "closed-loop"-Regelung, wie sie gemäß der EP 1 705 616 A1 vorgenommen wird, ist jedoch nicht geeignet, eine Langzeitstabilisierung der Laserleistung zu erzielen.

EP-A-1033229 offenbart die Merkmale des Oberbegriffs des Anspruchs 1.

Es ist Aufgabe der Erfindung, ein Verfahren zum Herstellen eines dreidimensionalen Objekts mittels Rapid Prototpying herzustellen, bei dem ein Gaslaser, insbesondere ein CO₂-Laser verwendet wird und bei dem Kurz- und Langzeit-Schwankungen der Leistung des Lasers eliminiert werden, sodass die Qualität des so hergestellten Objekts verbessert wird.

Die Aufgabe wird gelöst durch ein Verfahren gemäß Patentanspruch 1. Weiterbildungen der Erfindung sind in den Unteransprüchen angegeben.

Das Verfahren weist insbesondere den Vorteil auf, dass durch eine automatisierte Auswertung der Laserleistung mit einer sehr geringen Verzögerung das Steuer-Eingangssignal des Lasers so angepasst werden kann, dass Einschalteffekte durch gezielte Einschaltrampen vermindert werden. Laserleistungsschwankungen können so bis in den Bereich von 10µs kompensiert werden.

Weitere Merkmale und Zweckmäßigkeiten der Erfindung ergeben sich aus der Beschreibung eines Ausführungsbeispiels anhand der Figuren. Von den Figuren zeigen:
Fig.1 eine schematische Darstellung einer Lasersintervorrichtung;
Fig. 2 eine grafische Darstellung, die die gemessene Leistung in Abhängigkeit von der Zeit mit und ohne Einschalt-Rampe bei einer Spur, die der Laserstrahl auf der Schicht belichtet, zeigt;
Fig. 3 zeigt schematisch den Verlauf des Steuer-Eingangssignals für den Laser; und
Fig. 4 zeigt schematisch die gemessene Leistung für zwei aufeinander folgende Spuren.

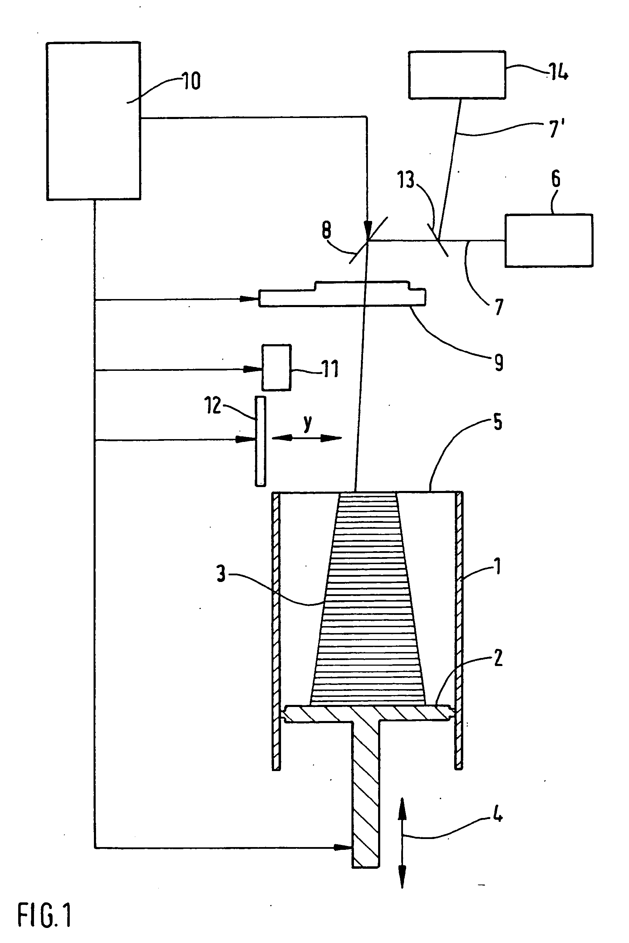

Im Folgenden wird mit Bezug auf Fig. 1 eine Lasersintervorrichtung mit der erfindungsgemäßen Lasersteuerung beschrieben.

Die Vorrichtung weist einen Baubehälter 1 auf, in dem ein Träger 2 zum Tragen eines zu bildenden Objekts 3 vorgesehen ist. Träger 2 ist über eine Höheneinstelleinrichtung 4 in vertikaler Richtung in dem Baubehälter verfahrbar. Die Ebene, in der aufgetragenes pulverförmiges Aufbaumaterial verfestigt wird, definiert eine Arbeitsebene 5. Zum Verfestigen des pulverförmigen Materials in der Arbeitsebene 5 ist ein Laser 6 vorgesehen, der als Gaslaser, insbesondere als CO₂-Laser ausgebildet ist. Der Laser 6 erzeugt einen Laserstrahl 7, der über eine Ablenkeinrichtung 8, beispielsweise in Form eines oder mehrerer Umlenkspiegel, der bzw. die über eine nicht dargestellte Schwenkeinheit geschwenkt werden können, und eine Fokussiereinheit 9 auf die Arbeitsebene 5 fokussiert wird. Es ist eine Steuerung 10 vorgesehen, die die Ablenkeinrichtung 8 und ggf. die Fokussiereinheit 10 derart ansteuert, dass der Laserstrahl 7 auf jede beliebige Stelle der Arbeitsebene 5 gelenkt werden kann.

Ferner ist eine Zufuhrvorrichtung 11 vorgesehen, mit der pulverförmiges Aufbaumaterial für eine folgende Schicht zugeführt werden kann. Mittels eines Beschichters 12 wird das Aufbaumaterial in die Arbeitsebene 5 aufgebracht und geglättet.

Aus dem Laserstrahlengang wird innerhalb des Lasers oder außerhalb, wie in Fig. 1 gezeigt ist, mittels eines teiltransparenten Spiegels 13 ein Teil 7' des Laserstrahls 7 ausgekoppelt. Der teiltransparente Spiegel 13 ist so ausgebildet, dass weniger als etwa 1% der Leistung ausgekoppelt wird. Bei der beschriebenen Ausführungsform ist der teiltransparente Spiegel 13 im Strahlengang vor der Ablenkeinrichtung 8 angeordnet. Der ausgekoppelte Strahl 7' trifft auf einen Sensor 14 zur Messung der Leistung. Der Sensor 14 ist vorzugsweise als ein Atomlagen-Thermopile-Sensor (Thermosäulen-Sensor) ausgebildet. Er besitzt eine kurze Antwortzeit von ungefähr 10µs. Damit ist die Auflösung einzelner Pulse des Lasers möglich. Insbesondere ist der Sensor derart ausgebildet, dass er eine Aufzeichnung des Einschaltverhaltens des Lasers parallel zum normalen Baubetrieb ermöglichen kann.

Im Betrieb wird der Träger 2 Schicht für Schicht abgesenkt, eine neue Pulverschicht aufgetragen und mittels des Laserstrahls 7 an den dem Objekt entsprechenden Stellen der jeweiligen Schicht in der Arbeitsebene 5 verfestigt. Dabei wird die Ablenkeinrichtung 8 derart angesteuert, dass der Laserstrahl 7 in Spuren über die Arbeitsebene 5 geführt wird. Ein bekanntes Belichtungsmuster ist beispielsweise die Belichtung mittels einer Mehrzahl von nebeneinander liegenden parallelen Spuren. Üblicherweise wird der Laser am Ende einer Spur ausgeschaltet und zu Beginn einer neuen Spur eingeschaltet.

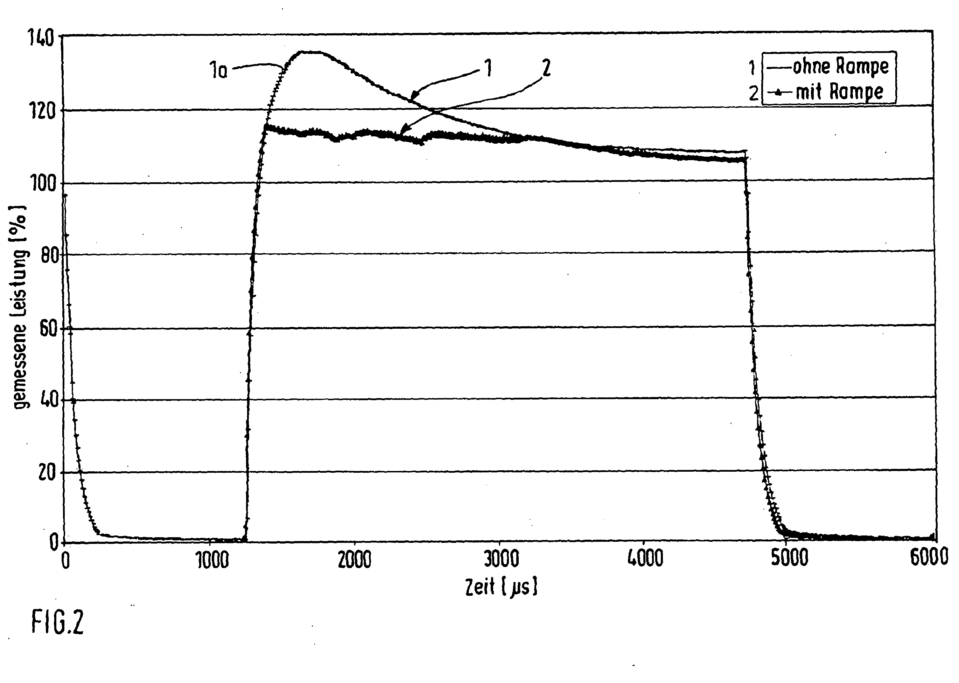

Fig. 2 zeigt die vom Sensor 14 gemessene Laserleistung in Abhängigkeit von der Zeit für eine Spur. Die Kurve 1 zeigt die gemessene Laserleistung, wenn keine erfindungsgemäße Steuerung vorgenommen wird. In diesem Fall ist das Einschalten des Lasers mit einem im linken Teil der Kurve deutlich erkennbaren Überschwinger 1a verbunden, d.h. die Leistung ist zu Beginn der Spur zu hoch. Dies führt, wenn alle oder die meisten Spuren derartige Leistungsschwankungen aufweisen, zu Ungenauigkeiten beim Objektaufbau, da die Verfestigung entlang einer Spur nicht gleichmäßig erfolgt.

Bei dem Verfahren nach einer bevorzugten Ausführungsform wird die Laserleistung mittels des Sensors 14 über einen Zeitraum in Echtzeit gemessen, der dem Zeitraum für den Einschaltvorgang einschließlich des Überschwingers entspricht. Dieser Zeitraum ist in Fig. 2 durch Δt₁ gezeigt.

Aus den gemessenen Leistungswerten wird für das Steuer-Eingangssignal des Lasers eine Einschaltrampe bestimmt, die die Abhängigkeit des Steuer-Eingangssignals von der Zeit für den Einschaltvorgang Δt₁ angibt und die so gewählt wird, dass der in Fig. 2 gezeigte Überschwinger 1a in Kurve 1 ausgeglichen ist. Die in Fig. 2 gezeigte Kurve 2 zeigt die gemessene Leistung für den Fall, dass das Steuer-Eingangssignal gemäß der gewählten Einschaltrampe beim Einschaltvorgang geändert wird.

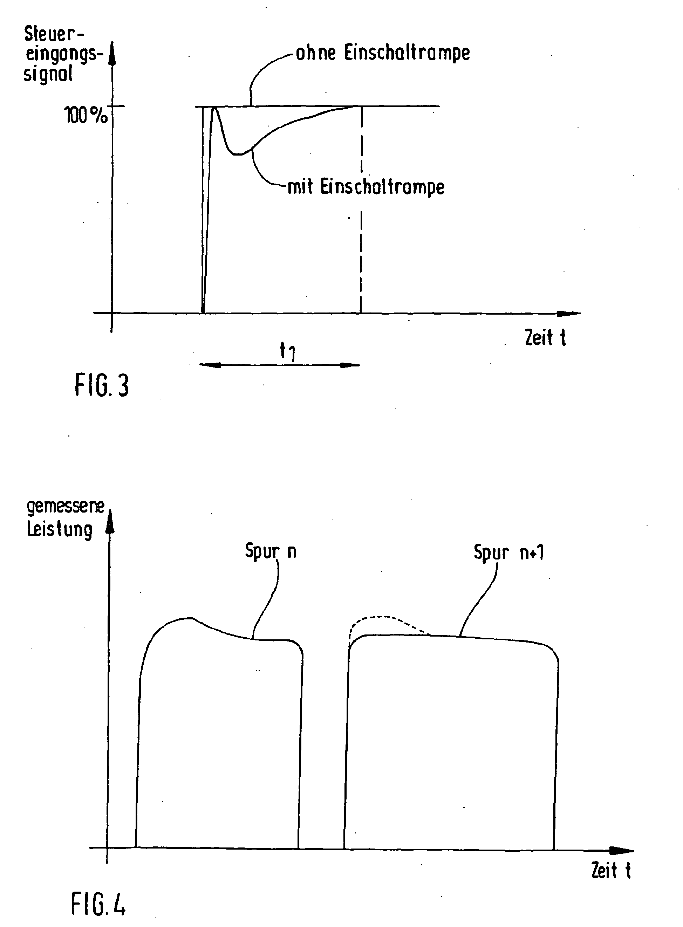

Fig. 3 zeigt schematisch den Wert des Steuer-Eingangssignals in Abhängigkeit von der Zeit. Wenn keine Einschaltrampe verwendet wird, ändert sich das Steuer-Eingangssignal abrupt von 0 auf den vorbestimmten Wert. Dies führt zu dem in Fig. 2 gezeigten Überschwinger. Bei Verwendung der Einschaltrampe wächst der Wert des Steuer-Eingangssignals entsprechend einer vorgegebenen Funktion an. Fig 3. zeigt eine vorteilhafte Ausführungsform dieser Funktion mit einem Startimpuls und einer anschließenden temporären Dämpfung des Ansteuersignals, wodurch ein schnelles Erreichen der Sollleistung des Lasers bei gleichzeitiger Verhinderung eines Überschwingers entsprechend Fig. 2 verhindert wird.

Die Einschaltrampe ist die über die Zeit aufgetragene Ansteuerleistung. Diese Rampe ist eine Funktion verschiedener Parameter und hängt insbesondere von der gewünschten Laserleistung, von der Pause vor dem Einschalten des Lasers sowie von der Summe der vorherigen Schaltzustände ab. Sie kann beispielsweise empirisch ermittelt werden und die Parameter können als Tabelle hinterlegt werden oder es kann eine zu berechnende Funktion definiert werden.

Wie in Fig. 4 ersichtlich ist, folgen mehrere Spuren aufeinander, beispielsweise Spur n und Spur n+1, mit denen der Laser die Schicht überstreicht. Die aus der Echtzeitmessung der Laserleistung beim Einschalten in Spur n zum Eliminieren des Überschwingers ermittelte Einschaltrampe wird bereits bei der nächsten Spur n+1 berücksichtigt. Die in Spur n+1 beim Einschaltvorgang gemessene Leistung kann wiederum zur Korrektur der Einschaltrampe für die nachfolgende Spur verwendet werden. Das Verfahren ist somit iterativ.

Mit dem beschriebenen Verfahren können Laserleistungsschwankungen bis in den Bereich der zeitlichen Auflösung des Sensors 14, d.h. bis in den Bereich von etwa 10µs kompensiert werden. Damit erfolgt eine Langzeitstabilisierung der Laserleistung, da die Stabilisierung nicht mehr von der ständig wechselnden Vorgeschichte des Laserbetriebs abhängt.

In einer abgewandelten Ausführungsform wird der Betrieb des Lasers über einen längeren Zeitraum ohne eine Stabilisierung mit dem Sensor überwacht und anhand der gemessenen Leistungskurven eine Klassifizierung bestimmter Betriebsweisen oder bestimmter Belichtungsmuster vorgenommen und daraus geeignete Einschaltrampen berechnet. Die Steuerung der Laserleistung wird dann basierend auf den vordefinierten Einschaltrampen mittels des oben beschriebenen iterativen Prozesses an den jeweiligen Laser angepasst.

Ferner ist es möglich, die Laserleistung zu protokollieren und über einen Protokollierungszeitraum den verwendeten Spuren zuzuordnen.

In einer weiteren Abwandlung kann das Einschaltverhalten an das Beschleunigungsverhalten innerhalb einer zu belichtenden Spur angepasst werden.

Die Erfindung ist nicht auf das oben beschriebene Ausführungsbeispiel beschränkt. Sie kann für alle Rapid Prototyping-Verfahren verwendet werden, bei denen ein Gaslaser verwendet wird.

Die Erfindung ist ferner nicht darauf beschränkt, dass die Steuerung der Laserleistung nur anhand des Einschaltverhaltens erfolgt, sondern es können alle Vorgänge gemessen und gesteuert werden, in denen eine Änderung der Laserleistung erfolgt, wie z.B. der Ausschaltvorgang oder Vorgänge mit Änderung von kleinerer zu größerer Laserleistung oder umgekehrt.

## Patentansprüche

1. Verfahren zum Herstellen eines dreidimensionalen Objekts (3), bei dem das Objekt durch schichtweises Verfestigen eines Aufbaumaterials mittels eines Strahls (7) eines Gaslasers (6) an jeweils den dem Querschnitt des Objekts in einer Schicht entsprechenden Stellen verfestigt wird, wobei die Leistung des Lasers gemessen wird und die Laserleistung in Abhängigkeit von dem gemessenen Wert gesteuert wird,
**dadurch gekennzeichnet, dass** die Leistungsmessung in einem Zeitfenster stattfindet, in dem eine Leistungsänderung erfolgt, und ein Steuer-Eingangssignal des Lasers in Abhängigkeit von den gemessenen Werten gesteuert wird.

2. Verfahren nach Anspruch 1, wobei die Leistungsänderung abrupt erfolgt.

3. Verfahren nach Anspruch 1 oder 2, wobei die Leistungsänderung ein Einschaltvorgang, ein Ausschaltvorgang oder ein Umschalten zwischen zwei Leistungswerten ist.

4. Verfahren nach einer der Ansprüche 1 bis 3, wobei der Laserstrahl (7) in Spuren über die Schicht geführt wird, wobei jede Spur einen Anfang aufweist und wobei der Laser (6) zu Beginn der Spur eingeschaltet wird und die Leistungsmessung beim Einschaltvorgang erfolgt.

5. Verfahren nach einem der Ansprüche 1 bis 4, wobei in Abhängigkeit von den gemessenen Werten eine Einschaltrampe ermittelt wird, gemäß der das Steuer-Eingangssignal des Lasers sich beim Einschaltvorgang ändert.

6. Verfahren nach einem der Ansprüche 1 bis 5, wobei der Laserstrahl (7) in Spuren über die Schicht geführt wird und die Spur einen Anfang und ein Ende aufweist, wobei der Laser (6) am Anfang der Spur eingeschaltet wird und am Ende der Spur ausgeschaltet wird, und wobei die Steuer-Eingangssignale des Lasers einer zeitlich späteren Spur von den Messwerten der Leistung beim Einschaltvorgang einer zeitlich früheren Spur abhängen.

7. Verfahren nach einem der Ansprüche 1 bis 6, wobei die Regelung iterativ erfolgt.

8. Verfahren nach einem der Ansprüche 1 bis 7, wobei der Laser ein CO₂-Laser ist.

9. Verfahren nach einem der Ansprüche 1 bis 6, wobei als Leistungsmesseinrichtung ein Sensor (14) verwendet wird, der eine Antwortzeit von etwa 10µs oder weniger aufweist.

## Claims

1. Method of manufacturing a three-dimensional object (3), in which the object is solidified layer by layer by solidifying a building material by means of a beam (7) of a gas laser (6) at locations in the layer corresponding to the cross section of the object, wherein the power of the laser is measured and the power of the laser is controlled according to the measured value, **characterized in that** the power measurement takes place in a time window, in which a change of the power occurs, and that an input control signal of the laser is controlled according to the measured values.

2. Method according to claim 1, wherein the change of the power abruptly occurs.

3. Method according to claim 1 or 2, wherein the change of the power is a switch-on operation, a switch-off operation or a switching between two power values.

4. Method according to any one of claims 1 to 3, wherein the laser beam (7) is guided in tracks above the layer, wherein each track has a beginning and wherein the laser (6) is switched-on at the beginning of the track and the power measurement is made at the switch-on operation.

5. Method according to any one of claims 1 to 4, wherein, according to the measured values, a switch-on ramp is determined and the input control signal of the laser is changed at the switch-on operation according to the switch-on ramp.

6. Method according to any one of claims 1 to 5, wherein the laser beam (7) is guided in tracks above the layer and the track has a beginning and an end, wherein the laser (6) is switched-on at the beginning of the track and switched-off at the end of the track, and wherein the input control signals of the laser of a later track depend on the measured values of the power during the switch-on operation of an earlier track.

7. Method according to any one of claims 1 to 6, wherein the control is iteratively performed.

8. Method according to any one of claims 1 to 7, wherein the laser is a CO2-laser.

9. Method according to any one of claims 1 to 6, wherein a sensor (14) is used as a means for measuring the power, which has a response delay of about 10 µs or less.

## Revendications

1. Procédé de fabrication d'un objet tridimensionnel (3), dans lequel l'objet est aggloméré par solidification en couches d'un matériau structurant au moyen d'un faisceau (7) d'un laser à gaz (6) à des endroits correspondant à la section de l'objet dans chaque couche, dans lequel la puissance du laser est mesurée et la puissance de laser commandée en fonction de la valeur mesurée,
**caractérisé en ce que** la mesure de puissance est effectuée dans un créneau temporel pendant lequel une variation de puissance a lieu, et **en ce qu'**un signal d'entrée de commande du laser est commandé en fonction de la valeur mesurée.

2. Procédé selon la revendication 1, dans lequel la variation de puissance est abrupte.

3. Procédé selon la revendication 1 ou la revendication 2, dans lequel la variation de puissance est un processus d'activation, un processus de désactivation ou une commutation entre deux valeurs de puissance.

4. Procédé selon l'une des revendications 1 à 3, dans lequel le faisceau laser (7) est guidé par pistes sur la couche, chaque piste présentant un début, le laser (6) étant activé au début de la piste et la mesure de puissance étant effectuée lors du processus d'activation.

5. Procédé selon l'une des revendications 1 à 4, dans lequel une rampe d'activation est déterminée en fonction des valeurs mesurées, suivant laquelle le signal d'entrée de commande du laser varie lors du processus d'activation.

6. Procédé selon l'une des revendications 1 à 5, dans lequel le faisceau laser (7) est guidé par pistes sur la couche, chaque piste présentant un début et une fin, le laser (6) étant activé au début de la piste et désactivé à la fin de la piste, et les signaux d'entrée de commande de laser d'une piste temporellement ultérieure étant fonction des valeurs de mesure de la puissance lors du processus d'activation d'une piste temporellement antérieure.

7. Procédé selon l'une des revendications 1 à 6, dans lequel la régulation est effectuée itérativement.

8. Procédé selon l'une des revendications 1 à 7, dans lequel le laser est un laser CO₂.

9. Procédé selon l'une des revendications 1 à 6, dans lequel un capteur (14) qui présente un temps de réponse de quelque 10 µs ou moins est utilisé comme dispositif de mesure de puissance.
